# EUROPEAN PATENT APPLICATION

(11) **EP 4 672 458 A1**
(43) Date of publication of application: **31.12.2025**
(21) Application number: 24849394.2
(22) Date of filing: 03.07.2024
(51) Int. Cl.: H01M 50/242, H01M 50/24, A62C 3/16, A62C 35/10, H01M 50/249, H01M 50/35

(54) **BATTERY PACK AND VEHICLE INCLUDING SAME**

(30) Priority: 03.08.2023 KR 20230101524
(71) Applicant: LG ENERGY SOLUTION, LTD., Seoul 07335 (KR)
(72) Inventor: Lee, Jung-Hoon, Daejeon 34122 (KR); Kim, Byung-Kyu, Daejeon 34122 (KR)
(74) Representative: Plasseraud IP
(86) International application number: PCT/KR2024/009428
(87) International publication number: WO 2025/028823

(57) **Abstract**

Disclosed is a battery pack, and a vehicle including the same. The battery pack includes a plurality of battery modules in which a plurality of battery cells are stacked; and a pack case configured to accommodate the plurality of battery modules, and an insert member is provided inside the pack case.

## Description

### TECHNICAL FIELD

This application is based on and claims priority from Korean Patent Application No. 10-2023-0101524, filed on August 3, 2023, with the Korean Intellectual Property Office, the disclosure of which is incorporated herein in its entirety by reference.

The present disclosure relates to a battery pack and a vehicle including the same, and more specifically, to a battery pack capable of preventing a pressure inside the battery pack from increasing, and a vehicle including the same.

### BACKGROUND ART

As the technology development and demand for mobile devices increase, demand for secondary batteries as an energy source is rapidly increasing, and nickel cadmium batteries or hydrogen ion batteries have been used as conventional secondary batteries, but recently, lithium secondary batteries that have almost no memory effect compared to nickel-based secondary batteries, thereby having advantages such as free charging and discharging, very low self-discharge rate, and high energy density, are widely used.

These lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

Lithium secondary batteries are composed of a positive electrode, a negative electrode, a separator interposed therebetween and an electrolyte, and are classified into a lithium ion battery (LIB), a polymer lithium-ion battery (PLIB), and the like depending on what positive electrode active material and negative electrode active material are used. Typically, electrodes of these lithium secondary batteries may be formed by coating a positive electrode or negative electrode active material on a current collector, such as an aluminum or copper sheet, a mesh, a film, a foil, or the like, and then drying the same.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

Various types of secondary batteries include a battery module having a case for protecting battery cells, where a plurality of battery cells are stacked and inserted to the case, and a battery pack in which a plurality of battery modules are accommodated.

If a thermal event occurs in a battery cell provided in the battery module, thermal energy may be trapped between the battery modules, causing the internal pressure to rapidly increase, and the flame may spread to other neighboring battery modules due to an explosion of the battery module, resulting in a chain reaction of fire.

For example, if there is insufficient free volume (a kind of buffer space where flame or gas can move) between adjacent battery modules disposed inside the battery pack, there is a problem in that the flame or gas cannot move, which increases the internal pressure and increases the risk of explosion.

### DISCLOSURE

### Technical Problem

Therefore, the present disclosure is directed to providing a battery pack that may prevent the pressure inside the battery pack from rapidly increasing by securing a free volume between battery modules when a thermal event occurs, and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery pack, comprising: a plurality of battery modules in which a plurality of battery cells are stacked; a pack case configured to accommodate the plurality of battery modules and having a through hole formed in at least a part thereof; and an insert member inserted into the pack case.

In an embodiment, at least a portion of the pack case may be configured as a double frame structure including: a first frame; and a second frame arranged in parallel to the first frame and spaced apart from the first frame by a preset interval, and the insert member may be inserted into the interval between the first frame and the second frame.

In an embodiment, each of the first frame and the second frame may be configured as a truss structure in which the through hole is formed.

In an embodiment, the truss structure may include a rim portion configured to form a rim; and a connection portion configured to connect the rim portion so that the through hole is formed.

In an embodiment, the insert member may be made of a material that melts at a preset temperature.

In an embodiment, the insert member may be made of a silicone pad.

In an embodiment, the insert member may be made of a mica pad.

In an embodiment, the insert member may be a fire extinguishing agent pad having a fire extinguishing material.

In an embodiment, the fire extinguishing material may contain Novec.

In an embodiment, the battery pack may further comprise a discharge path member spaced apart from the battery module to cover at least a portion of the battery module and configured to provide a discharge path for flame or gas.

In an embodiment, the discharge path member may be provided in plurality, and the plurality of discharge path members may be spaced apart by preset intervals to cover the battery module.

In an embodiment, the pack case may include a lower frame on which the plurality of battery modules are seated; a side frame extending upward from an edge of the lower frame; an inner frame extending upward from an inside of the lower frame and coupled to the side frame; a barrier frame coupled to the inner frame and interposed between the plurality of battery modules; and an upper frame coupled to the side frame, and the plurality of discharge path members may be coupled to the side frame and the barrier frame.

In an embodiment, the plurality of discharge path members may be configured so that the flame or the gas moves upward through the interval between the plurality of discharge path members.

In an embodiment, a space may be formed between the upper frame and the discharge path member, and the flame or the gas may be discharged in a preset direction through the space.

Meanwhile, in another aspect of the present disclosure, there is also provided a vehicle, comprising the battery pack described above.

### Advantageous Effects

The embodiments of the present disclosure have the effect of preventing the pressure inside the battery pack from rapidly increasing by securing a free volume between battery modules when a thermal event occurs.

Also, the present disclosure has the effect of ensuring the stability of the battery module.

However, the effects that can be derived through the present disclosure are not limited to the effects described above, and other technical effects not mentioned above will be clearly understood by those skilled in the art from the following disclosure.

### DESCRIPTION OF DRAWINGS

FIG. 1 is an exploded perspective view showing a battery pack according to the first embodiment of the present disclosure.
FIG. 2 is a cross-sectional view showing a battery module included in the battery pack of FIG. 1.
FIG. 3 is an enlarged view showing part A of FIG. 1.
FIG. 4 is a perspective view and a partially enlarged view showing an insert member in the battery pack according to the first embodiment of the present disclosure.
FIG. 5 is a plan view of FIG. 4, with some parts omitted.
FIG. 6 is a perspective view showing the battery pack according to the first embodiment of the present disclosure with the insert member removed from a pack case.
FIG. 7 is a plan view of FIG. 6, with some parts omitted.
FIG. 8 is a perspective view showing a battery pack according to the second embodiment of the present disclosure.
FIG. 9 is an enlarged view of part B of FIG. 8.
FIG. 10 is a cross-sectional view, taken along line C-C' of FIG. 8, with some parts omitted.
FIG. 11 is a drawing for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

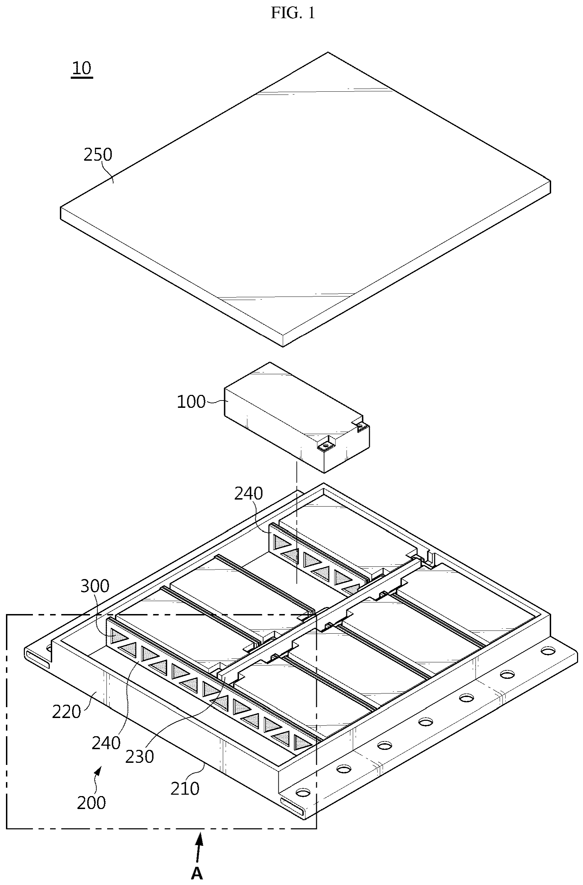

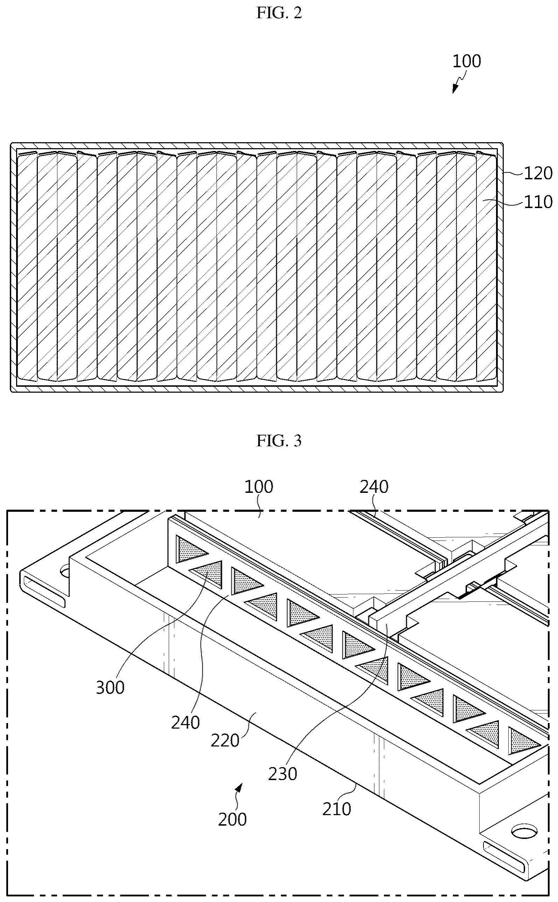

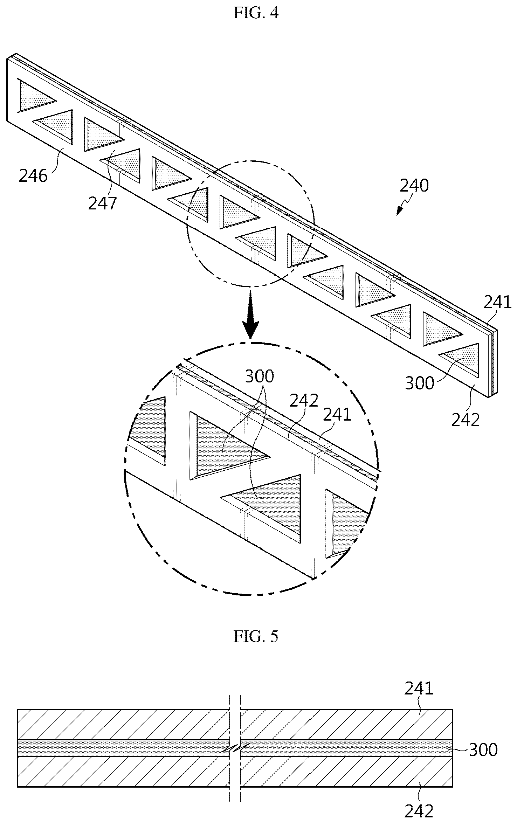

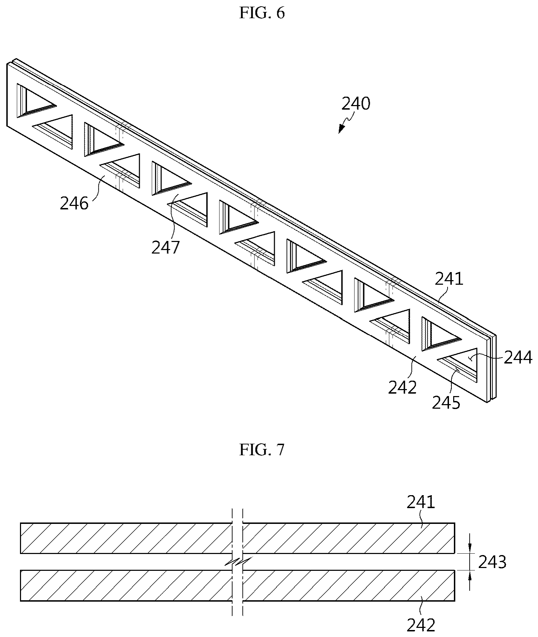

FIG. 1 is an exploded perspective view showing a battery pack according to the first embodiment of the present disclosure, FIG. 2 is a cross-sectional view showing a battery module included in the battery pack of FIG. 1, FIG. 3 is an enlarged view showing part A of FIG. 1, FIG. 4 is a perspective view and a partially enlarged view showing an insert member in the battery pack according to the first embodiment of the present disclosure, FIG. 5 is a plan view of FIG. 4, with some parts omitted, FIG. 6 is a perspective view showing the battery pack according to the first embodiment of the present disclosure with the insert member removed from a pack case, and FIG. 7 is a plan view of FIG. 6, with some parts omitted.

Referring to FIG. 1, the battery pack 10 according to the first embodiment of the present disclosure may include a plurality of battery modules 100, a pack case 200, and an insert member 300.

A plurality of battery modules 100 are provided and arranged in various ways. For example, as shown in FIG. 1, the plurality of battery modules 100 may be arranged horizontally and vertically, but are not limited thereto.

Referring to FIG. 2, the battery module 100 may include a plurality of battery cells 110 and a module case 120.

The plurality of battery cells 110 may be stacked one another. The battery cell 110 may have various structures, and the plurality of battery cells 110 may be stacked in various ways.

The battery cell 110 may be configured in a structure in which a plurality of unit cells, in which a positive electrode plate, a separator, and a negative electrode plate are arranged in sequence, or a plurality of bi-cells, in which a positive electrode plate, a separator, a negative electrode plate, a separator, a positive electrode plate, a separator, and a negative electrode plate are arranged in sequence, is stacked according to the battery capacity.

The battery cell 110 may have an electrode lead. The electrode lead is a kind of terminal that is exposed to the outside and connected to an external device, and may be made of a conductive material. The electrode lead may include a positive electrode lead and a negative electrode lead.

The positive electrode lead and the negative electrode lead may be disposed at opposite sides with respect to the longitudinal direction of the battery cell 110, or the positive electrode lead and the negative electrode lead may be located at the same side with respect to the longitudinal direction of the battery cell 110.

The battery cell 110 may have a plurality of cartridges (not shown) that accommodate the battery cells 110. Each cartridge (not shown) may be manufactured by plastic injection molding, and a plurality of cartridges (not shown) having a storage portion capable of storing the battery cells 110 may be stacked. A cartridge assembly in which a plurality of cartridges (not shown) is stacked may have connector elements or terminal elements.

The connector elements may include, for example, various types of electrical connection components or members for connection with a BMS (Battery Management System) (not shown) capable of providing data on the voltage or temperature of the battery cell 110 or the like.

In addition, the terminal elements are main terminals connected to the battery cell 110 and include a positive electrode terminal and a negative electrode terminal. The terminal element may have a terminal bolt to be electrically connected to the outside structure. Meanwhile, the battery cell 110 may have various shapes.

Referring to FIG. 2, a plurality of battery cells 110 are stacked and accommodated in the module case 120. The module case 120 surrounds the plurality of battery cells 110 and thus protects the battery cells 110 from external vibration or shock.

The module case 120 may be formed in a shape corresponding to the shape of the stack formed by stacking a plurality of battery cells 110. For example, if the stack formed by stacking a plurality of battery cells 110 has a hexahedral shape, the module case 120 may also be formed in a hexahedral shape to correspond thereto. However, the present disclosure is not limited thereto. Here, the module case 120 may include an upper module case, a lower module case, and a side module case.

In addition, the module case 120 may be manufactured, for example, by bending a metal plate, and as a result, the module case 120 may be manufactured as an integrated piece. If the module case 120 is manufactured as an integrated piece, the coupling process may be simplified and easy. Alternatively, the module case 120 may be configured as a separate type and coupled by welding or the like. However, the material of the module case 120 is not limited to metal.

Referring to FIGS. 1 and 3, a plurality of battery modules 100 are accommodated in a pack case 200. Also, referring to FIG. 6, through holes 244 and 245 are formed in at least a part of the pack case 200, for example a barrier frame 240 provided in the pack case 200.

The pack case 200 may include, for example, a lower frame 210, a side frame 220, an inner frame 230, a barrier frame 240, and an upper frame 250. Here, the through holes 244 and 245 may be formed in at least one of the side frame 220, the inner frame 230, and the barrier frame 240.

The lower frame 210 is configured so that the plurality of battery modules 100 are seated thereon. The lower frame 210 may be formed in a square plate shape, but is not limited thereto. The lower frame 210 forms the bottom of the pack case 200.

The side frame 220 may be configured to extend upward from the edge of the lower frame 210. The side frame 220 defines the height of the pack case 200 and forms a preset space 600 between the side frame 220 and the lower frame 210. Also, a plurality of battery module 100 are seated in the space 600 between the side frame 220 and the lower frame 210. The side frame 220 may include a long side frame, which is relatively long, and a short side frame, which is relatively short. Alternatively, the side frames 220 may have the same length.

The inner frame 230 extends upward from the inside of the lower frame 210 and is coupled to the side frame 220 and the barrier frame 240. One or more inner frames 230 may be provided, and a plurality of battery modules 100 may be arranged to face each other based on the inner frame 230.

The barrier frame 240 is coupled to the inner frame 230. Also, the barrier frame 240 is interposed between the plurality of battery modules 100. In FIG. 1, one barrier frame 240 is disposed between two neighboring battery modules 100, but the present invention is not limited thereto. Also, the barrier frame 240 is disposed at the end of the battery module 100.

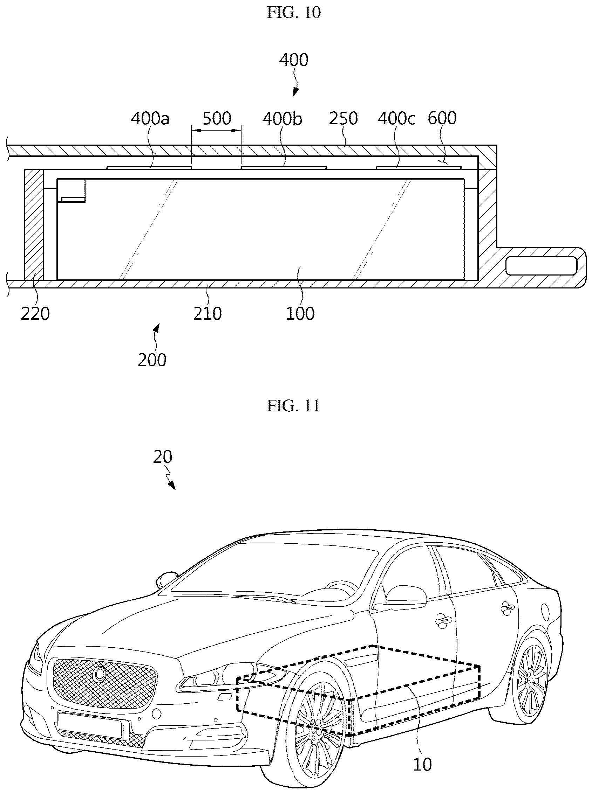

The upper frame 250 is coupled to the side frame 220. As explained in detail later, a space 600 through which a flame or gas may be discharged may be formed between the upper frame 250 and the discharge path member 400 (see FIG. 10).

At least a portion of the pack case 200 may be configured as a double frame structure including a first frame 241 and a second frame 242. Referring to FIG. 1, although the barrier frame 240 is configured as a double frame structure, the side frame 220 and the inner frame 230 may also be configured as double frame structures. For convenience of explanation, the following description will focus on a case where the barrier frame 240 is configured as a double frame structure including the first frame 241 and the second frame 242.

Referring to FIG. 1 and FIG. 4 together, the first frame 241 of the barrier frame 240 is positioned close to the battery module 100. Also, referring to FIG. 6, a first through hole 244 is formed in the first frame 241. The first frame 241 may be made of a metal material, but the material is not limited thereto. Also, the first frame 241 may have a square plate shape, but the shape is not limited thereto.

The second frame 242 of the barrier frame 240 is arranged in parallel with the first frame 241 with a preset interval 243 (see FIG. 7). In addition, referring to FIG. 6, a second through hole 245 is formed in the second frame 242. Also, the second frame 242 may be made of the same material as the first frame 241 and, for example, may be made of a metal material, but the material is not limited thereto. In addition, the second frame 242 may be formed in the same shape as the first frame 241 and, for example, may be manufactured in a square plate shape, but the shape is not limited thereto.

In addition, referring to FIGS. 5 and 7, an insert member 300 is inserted into the interval 243 between the first frame 241 and the second frame 242. The insert member 300 will be described later.

Referring to FIG. 6, each of the first frame 241 and the second frame 242 may be manufactured as a truss structure in which the through holes 244 and 245 are formed. The truss structure may have various structures. For example, referring to FIGS. 4 and 6, the truss structure may be configured to include a rim portion 246 and a connection portion 247.

The rim portion 246 is configured to form a rim of the frame (the first frame 241 or the second frame 242). The connection portion 247 connects the rim portion 246 so that the through holes 244 and 245 are formed. Referring to FIG. 6, the first frame 241 and the second frame 242 are provided to have a truss structure by a plurality of right-angled triangle-shaped through holes 244 and 245, but the shapes of the through holes 244 and 245 are not limited thereto and may have various shapes.

In this way, as the frame has a truss structure, the rigidity of pack case 200 may be secured.

Referring to FIGS. 1, 4, and 5, the insert member 300 may be inserted into the pack case 200, for example, into the barrier frame 240 of the pack case 200. The insert member 300 may be made of a material that melts at a preset temperature.

As described above, if a thermal event occurs in the battery cell 110 within the battery module 100, thermal energy may be trapped between the battery modules 100, causing the internal pressure to rapidly increase.

As in FIG. 1, if the space between one barrier frame 240 and the neighboring barrier frame 240 is narrow so that there is an insufficient free volume to act as a buffer space, when a thermal event occurs, the flame or gas cannot move to the free volume, and as a result, the internal pressure increases, which may cause the battery pack 10 to explode.

To prevent this, the battery pack 10 according to the first embodiment of the present disclosure has a structure in which the through holes 244 and 245 are respectively formed in the first frame 241 and the second frame 242 as described above, and the insert member 300 is inserted between the first frame 241 and the second frame 242.

Here, the insert member 300 may be made of a material that melts at a preset temperature, as described above. When a thermal event occurs in the battery cell 110 and the temperature rises due to a flame or the like, the insert member 300 melts at the preset temperature. Also, if the insert member 300 melts, the flame or gas may move outward through the through holes (the first through hole 244 and the second through hole 245) of the first frame 241 and the second frame 242.

As the insert member 300 melts, the insert member 300 communicates with the neighboring space through the through holes 244 and 245 of the first frame 241 and the second frame 242, thereby increasing the free volume through which the flame or gas can move, and as a result, it is possible to prevent the pressure inside the battery pack 10 from increasing.

If a flame or the like moves laterally immediately after a thermal event occurs inside the battery pack 10, the flame or the like may have a negative effect on the neighboring battery, so the insert member 300 blocks the movement of the flame in the early stage of the thermal event. Also, when the insert member 300 melts as time passes, since the flame or gas has been sufficiently vented (e.g., upper venting), it is more advantageous for the insert member 300 to be removed by the high temperature and for the free volume to be secured.

That is, at the early stage when a flame occurs in any battery module 100 within the battery pack 10, the flame may be prevented from moving to the neighboring battery module 100 by the insert member 300. Also, if the flame or gas is vented as time passes, the insert member 300 melts due to the high temperature, securing a free volume, thereby preventing the pressure within the battery pack 10 from increasing.

Here, the melting temperature of the insert member 300 may vary depending on the configuration of the battery pack 10. That is, for example, the melting temperature of the insert member 300 may vary depending on the specifications or model of the battery pack 10, and the specific melting temperature may be determined through experiments, etc.

For this purpose, the insert member 300 may be made of various materials. For example, the insert member 300 may be made of a silicone pad. Alternatively, as another embodiment, the insert member 300 may be made of a mica pad. The silicone pad and the mica pad may be selected according to the ignition temperature or the temperature due to the flame of the battery cells 110 stacked inside the battery module 100. Here, since mica is a refractory material that melts at a higher temperature than the silicone pad, the mica pad may be used as the insert member 300 in specifications or models in which a high-temperature flame is generated.

In a modified embodiment, the insert member 300 may be a fire extinguishing agent pad having a fire extinguishing material. For example, the fire extinguishing material may be filled inside the insert member 300. Here, when the insert member 300 melts by the flame through the through holes 244 and 245 of the frames 241 and 242, the fire extinguishing material inside the insert member 300 flows out and removes the flame. In addition, when the insert member 300 melts, it is possible to secure a free volume, and thereby there is an effect of reducing the pressure inside the battery pack 10.

Here, the fire extinguishing material may be various and may include, but is not limited to, Novec.

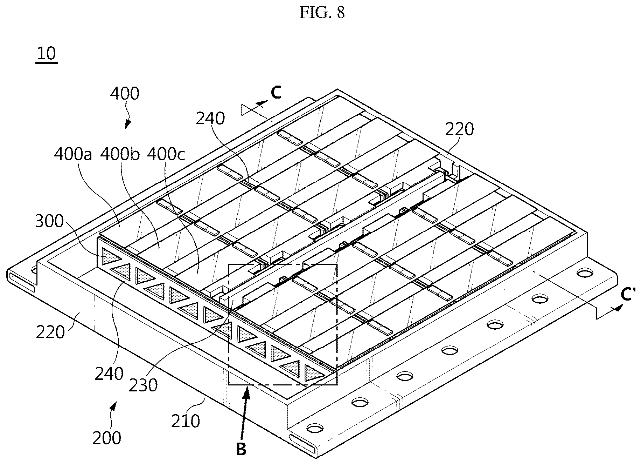

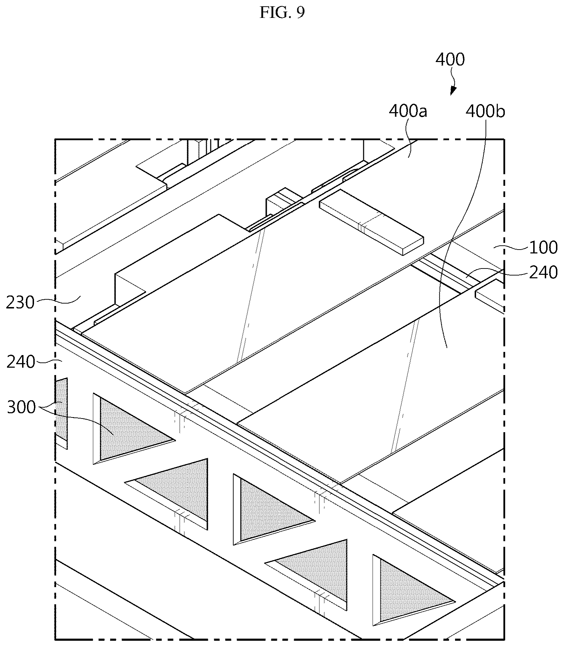

FIG. 8 is a perspective view showing a battery pack according to the second embodiment of the present disclosure, FIG. 9 is an enlarged view of part B of FIG. 8, and FIG. 10 is a cross-sectional view, taken along line C-C' of FIG. 8, with some parts omitted.

Referring to FIG. 8, the second embodiment of the present disclosure is structurally different from the first embodiment in that a discharge path member 400 is included. However, the common features described in the first embodiment are replaced with the above description of the first embodiment. Also, the features of the second embodiment that are applicable to the first embodiment may be applied to the first embodiment.

Referring to FIG. 8, the discharge path member 400 is spaced apart from the battery module 100 to cover at least a portion of the battery module 100, and provides a discharge path for flame or gas. The discharge path member 400 may be configured in various ways. For example, as shown in FIG. 8, a plurality of discharge path members 400 may be provided, and the plurality of discharge path members 400a, 400b, and 400c may be spaced apart from each other by a preset interval 500.

Also, referring to FIGS. 8 and 9, the plurality of discharge path members 400a, 400b, and 400c are arranged to be spaced apart from each other to cover the battery module 100. In FIG. 8, three discharge path members 400a, 400b, and 400c cover the battery modules 100, but the number of discharge path members 400 is not limited thereto and may vary.

As described in the first embodiment, the pack case 200 may be configured to include, for example, a lower frame 210, a side frame 220, an inner frame 230, a barrier frame 240, and an upper frame 250. A detailed description thereof is replaced by the above description.

In addition, the plurality of discharge path members 400a, 400b, and 400c may be coupled to the side frame 220 and the barrier frame 240. At this time, as in FIG. 10, a space 600 may be formed between the upper frame 250 and each of the plurality of discharge path members 400a, 400b, and 400c.

For example, if a thermal event occurs in the battery cell 110 within the battery module 100, a flame or gas may move upward through the interval 500 between the plurality of discharge path members 400a, 400b, and 400c (e.g., between two adjacent discharge path members 400a and 400b that are arranged close to each other).

In addition, the flame or gas that has moved upward through the interval 500 between the plurality of discharge path members 400a, 400b, and 400c may be discharged in a preset direction through the space 600 between the upper frame 250 and the discharge path member 400. Here, the space 600 between the upper frame 250 and the discharge path member 400 may provide a passage for the flame or gas to move.

If the flame or gas moves through the space 600 between the upper frame 250 and the discharge path member 400 in this way, the flame or gas may be prevented from flowing back into the battery module 100 where the thermal event has occurred.

For example, if only the upper frame 250 is equipped while the discharge path member 400 is not equipped, the flame or gas generated during a thermal event may move upward, collide the upper frame 250, and be reflected therefrom, thereby causing the flame or gas to flow back into the battery module 100 where the thermal event has occurred. If the flame or gas flows back into the battery module 100 in this way, the ignition speed of the module is accelerated, increasing the risk of explosion.

However, in the battery pack 10 according to the second embodiment of the present disclosure, since the discharge path member 400 is provided at the lower side of the upper frame 250, even if the flame or gas collides with the upper frame 250 and is reflected, the flame or gas is blocked by the discharge path member 400, thereby preventing the flame or gas from flowing back into the battery module 100. In addition, this has the effect of reducing the risk of explosion of the battery module 100 in which a thermal event has occurred.

FIG. 11 is a drawing for illustrating a vehicle including the battery pack 10 according to each embodiment of the present disclosure.

Referring to FIG. 11, the vehicle 20 according to one embodiment of the present disclosure may include one or more battery packs 10 according to each of the above-described embodiments. Here, the vehicle 20 includes various vehicles designed to use electricity, such as electric vehicles or hybrid electric vehicles.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery pack and a vehicle including them, and particularly, is available to industries related to secondary batteries.

## Claims

1. A battery pack, comprising:
a plurality of battery modules in which a plurality of battery cells are stacked;
a pack case configured to accommodate the plurality of battery modules and having a through hole formed in at least a part thereof; and
an insert member inserted into the pack case.

2. The battery pack according to claim 1,
wherein at least a portion of the pack case is configured as a double frame structure including:
a first frame; and
a second frame arranged in parallel to the first frame and spaced apart from the first frame by a preset interval,
wherein the insert member is inserted into the interval between the first frame and the second frame.

3. The battery pack according to claim 2,
wherein each of the first frame and the second frame is configured as a truss structure in which the through hole is formed.

4. The battery pack according to claim 3,
wherein the truss structure includes:
a rim portion configured to form a rim; and
a connection portion configured to connect the rim portion so that the through hole is formed.

5. The battery pack according to claim 3,
wherein the insert member is made of a material that melts at a preset temperature.

6. The battery pack according to claim 5,
wherein the insert member is made of a silicone pad.

7. The battery pack according to claim 1,
wherein the insert member is made of a mica pad.

8. The battery pack according to claim 1,
wherein the insert member is a fire extinguishing agent pad having a fire extinguishing material.

9. The battery pack according to claim 8,
wherein the fire extinguishing material contains Novec.

10. The battery pack according to claim 1, further comprising:
a discharge path member spaced apart from the battery module to cover at least a portion of the battery module and configured to provide a discharge path for flame or gas.

11. The battery pack according to claim 10,
wherein the discharge path member is provided in plurality, and the plurality of discharge path members are spaced apart by preset intervals to cover the battery module.

12. The battery pack according to claim 11,
wherein the pack case includes:
a lower frame on which the plurality of battery modules are seated;
a side frame extending upward from an edge of the lower frame;
an inner frame extending upward from an inside of the lower frame and coupled to the side frame;
a barrier frame coupled to the inner frame and interposed between the plurality of battery modules; and
an upper frame coupled to the side frame,
wherein the plurality of discharge path members are coupled to the side frame and the barrier frame.

13. The battery pack according to claim 12,
wherein the plurality of discharge path members are configured so that the flame or the gas moves upward through the interval between the plurality of discharge path members.

14. The battery pack according to claim 13,
wherein a space is formed between the upper frame and the discharge path member, and the flame or the gas is discharged in a preset direction through the space.

15. A vehicle, comprising the battery pack according to any one of claims 1 to 14.
